# EUROPEAN PATENT SPECIFICATION

(11) **EP 2 236 995 B1**
(45) Date of publication and mention of the grant of the patent: **30.05.2012**
(21) Application number: 09179932.0
(22) Date of filing: 18.12.2009
(51) Int. Cl.: G01F 1/66

(54) **Flow meter with transducer positioned and aligned by circuit board**
Flussmesser mit einem an einer Messleiterplatte direkt ausgerichteten und befestigten Ultraschallwandler
Débitmètre doté d'un transducteur à ultrason directement aligné par et fixé sur une carte de circuit de mesure

(30) Priority: 02.04.2009 EP 09157174
(43) Date of publication of application: 06.10.2010
(73) Proprietor: KAMSTRUP A/S, 8660 Skanderborg (DK)
(72) Inventor: Nielsen, Søren Tønnes, DK-8355, Solbjerg (DK); Laursen, Peter Schmidt, DK-8660, Skanderborg (DK); Skallebaek, Anders, DK-8660, Skanderborg (DK)
(74) Representative: Plougmann & Vingtoft A/S

(56) References cited:
- WO-A-2008/053193
- DE-U1-202007 011 493
- GB-A- 2 359 140
- US-A1- 2008 271 543

## Description

### FIELD OF THE INVENTION

The invention relates to an ultrasound flow meter for ultrasonic measurements of fluid flow. In particular the invention provides an ultrasound flow meter with a circuit board shaped to limit relative motion of an ultrasound transducer.

### BACKGROUND OF THE INVENTION

Normally, ultrasound flow meters suited for measuring a fluid flow in connection with charging of a consumed quantity (e.g. heat, cooling, water or gas) will have a housing, which can be metallic or polymeric, with a cavity in the form of a through-going hole for receiving a fluid flow to be measured. Connection means to other fluid flow elements are present in each of the housing ends.

In the housing a number of ultrasound transducers are installed for measuring the velocity of the fluid flow. In most flow meters two ultrasound transducers are used for sending, respectively receiving, an ultrasound signal, but versions with one ultrasound transducer, as well as versions with more than two ultrasound transducers, are seen. Furthermore, an electronic circuit for operation of the ultrasound transducers is typically mounted in a separate enclosure and fastened to the housing. Most often the electronic circuit is implemented on a Printed Circuit Board (PCB).

The ultrasound transducers can be electrically connected to the electronic control circuit in various ways. Common methods include soldering ends of connection wires onto the ultrasound transducers directly and onto the PCB respectively, or using a plug connection between the same. However, one common problem with prior art ultrasound flow meters is that, their assembly involves a large number of parts, and is time consuming. Furthermore, the high requirements in regard to precision of the finished flow meter imply precision work during manufacturing, which is very labour intensive.

In WO 2008/053193 A1 an ultrasonic flow-rate measurement device is disclosed, wherein a cover member of a complementary shape to the housing is provided for protecting and securing the flexible PCB, the ultrasonic transducers and the pressure sensor in position. The ultrasonic transducers are positioned on a surface of the flexible PCB and transmit ultrasonic signals via a hole in the flexible PCB. The manufacturing process required for the assembly of the disclosed device is very complex, and especially if a precise position of the transducers is desired, the assembly process is very demanding and thus not suited for an automated low cost mass production.

### SUMMARY OF THE INVENTION

In view of the above, it may be seen as an object of the present invention to provide an improved ultrasound flow meter for ultrasonic measurement of a fluid flow and an improved method of manufacturing of a flow meter which might permit integration of parts, reduce assembly time and further reduce the amount of labour required for assembling a high precision flow meter.

Accordingly, the invention provides, in a first aspect, an ultrasound flow meter arranged to measure a flow rate of a fluid flowing through a measuring tube, the flow meter comprising
- a housing with the measuring tube arranged inside, and
- a first ultrasound transducer, and
- a circuit board with an electronic circuit arranged for operating the first ultrasound transducer, wherein the circuit board is shaped so that at least two points on an edge of the circuit board serve to limit relative movement between the first ultrasound transducer and the circuit board in a direction along a line spanned by the two points.

Thus, an improved ultrasound flow meter for ultrasonic measurement of a fluid flow is provided. In particular, it may be seen as an improvement that integration of parts involved with the positioning and the mounting of the ultrasound transducer is achieved, as the circuit board serves as position means for the ultrasound transducer. An advantage of this is that contact forces between the edge and the transducer participates in fixing the transducer relative to the circuit board. Hereby the PCB can serve e.g. to position two ultrasound transducers relative to each other, and thus further positioning means become superfluous. Possibly, an interfacial layer, such as glue or solder, may be included and participate in mediating this effect. This is advantageous for effective production, since the movement between ultrasound transducer and circuit board is limited by the edge of the circuit board. This means that during manufacture, the ultrasound transducer can be positioned with very high precision in relation to the circuit board, using the edge, without time consuming measurements of where to place the transducer. Another possible advantage of the invention is, that alternative guiding means, which constitute further parts and are labour intensive to mount, are rendered superfluous.

Still further, by fixing the one or more ultrasound transducers to the circuit board with all necessary measurement circuits arranged thereon, a separate functioning ultrasound measurement unit is provided. This separate unit can then be tested before final assembly of the complete flow meter. Hereby, the production cost can be lowered since integration of parts is achieved, and time consuming process steps can be avoided. Furthermore, a higher precision in the positioning of the ultrasound transducers can be achieved with the same or less effort, as a result of reduced tolerances. Also, a more reliable flow meter can be achieved due to fewer parts and connections. Moreover, this can also lead to an increase in lifetime of the ultrasound flow meter.

In standard embodiments, the circuit board has a thickness which is thinner than its lateral dimensions, such as a thickness within 0.1 mm to 2 mm, and furthermore, the circuit board has all electronic components needed for implementing the electronic circuit arranged for operating at least the first ultrasound transducer. Furthermore, the circuit board has conductive paths disposed on its surface and the electronic components are connected to these paths.

The circuit board might have a through going hole in an area on the circuit board corresponding to a projection of the transducer onto the plane defined by the circuit board. Alternatively, there might be a slit protruding from an edge of the circuit board into the area on the circuit board corresponding to a projection of the transducer onto the plane defined by the circuit board. An advantage of this is that the effect of thermal expansion of respectively circuit board and ultrasound transducer on a fixing member, such as solder or clips, becomes less detrimental. An advantage of having a through going hole is that it is possible to apply a contact force onto the transducer in a direction orthogonal to the circuit board through the circuit board without applying a possibly damaging force directly onto the circuit board.

It is to be understood that the first ultrasound transducer need not be in contact with any of the at least two points on an edge of the circuit board in order to obtain the limitation of the relative movement between the first ultrasound transducer and the circuit board in a direction along a line spanned by the two points. The limitation of relative movement is also obtained if the first ultrasound transducer is placed between the at least two points on an edge of the circuit board. This limitation is advantageous during manufacturing, where the edge of the circuit board serves to keep the transducers in position relative to the circuit board, e.g. during a soldering process such as a surface mounting process. Thus, the relative movement limiting effect of the circuit board edge is useful for positioning the transducers within a desired tolerance, e.g. if the transducers are mounted in a through going hole of the circuit board, where the hole has a size which is slightly larger than the outer dimensions of the transducer, e.g. a hole of Ø10.5 mm in case of a transducer with a dimension of Ø10 mm. Also in case of two transducers, the position of both transducers can be controlled within a predetermined tolerance during an automated manufacturing process, thus still leading to an end product with precisely positioned transducers.
Preferably, the edge forms part of a circumferential boundary of the circuit board. An advantage of this might be that the circuit board can be made relatively short compared to the distance between two ultrasound transducers mounted in relation to the circuit board, e.g. in each end of the circuit board. In such embodiments only part of the transducer boundary is guided by the edge of the circuit board. A possible further advantage is that it might facilitate mounting of the ultrasound transducers, e.g. by insertion into clips mounted on the circuit board.

In some embodiments a portion of the edge is shaped to fit a portion of an outline of the first ultrasound transducer. An advantage of this is that the area of the surface of contact between ultrasound transducer and circuit board is increased, and thus the effect of limiting relative movement between transducer and circuit board is improved.

In a preferred embodiment a plane defined by a surface of the circuit board intersects the first ultrasound transducer. Especially, this embodiment is preferred in embodiments where the circuit board has a plane surface at least in the area adjacent to the transducer, i.e. such that the surface of the circuit board in this plane area intersects the transducer when mounted.

In a simple embodiment, the circuit board is plane in its entire extension, and thus a standard, low cost circuit board can be used, and the edge can then be shaped by simply cutting or drilling so as to provide the at least two points on an edge serving to position the transducer relative to the circuit board.

In one embodiment the at least two points are situated on a single edge which forms a boundary of a hole in the circuit board, such as the edge forming a boundary of a recess in the circuit board. This might be advantageous since the ultrasound transducer can be supported all around its periphery, and thus its position relative to the circuit board can be fixed in all directions in a plane defined by the edge, i.e., more than two points on the edge serve to position the transducer relative to the circuit board. Another advantage of this could be that the outer periphery of the circuit board need not have any concave portion, such as indentations. This might make the circuit board less susceptible towards torsional forces. In a preferable embodiment, the size and shape of the hole matches an outer size and shape of the ultrasound transducer. In yet another preferred embodiment the at least two points are situated on separate edges of the circuit board. In special embodiments the separate edges are edges of protrusions on a surface of the circuit board.

In yet another embodiment the hole is a through-going hole in the circuit board, such as a through-going hole shaped to fit around the first transducer, such as a through-going hole having a different shape than the first transducer, such as a through-going hole having a shape matching a shape of the first transducer. In a preferable embodiment, the size and shape of the hole matches an outer size and shape of the ultrasound transducer, of course taking into account a suitable clearing. The hole might have a circular shape. An advantage of having a hole that has a circular shape might be that even though the transducer might not be circular, and hence not generally rotationally symmetrical, such as for example if the transducer is quadratic, it might still be possible to mount the transducer in the hole even though the transducer has been rotated. An advantage of having a non-circular hole might be that it enables limitation of rotational movement of a non-circular transducer mounted in the hole.

In another preferred embodiment the first ultrasound transducer has a circular shape, and the hole has a shape being one of: circular, triangular, and rectangular. An advantage of having a circular transducer is that its rotational symmetry allows mounting which is not sensitive to the rotation of the transducer, thus facilitating mounting in an automated process, such as a robot process. In a particular embodiment, the hole has a quadratic shape.

In some embodiments, the ultrasound flow meter comprises fixing means arranged to fix the first ultrasound transducer to the circuit board, such as one or more clips, such as solder, such as glue, such as electrically conductive glue, such as a bracing, such as one or more spring loaded clamps or screwed connections. Especially, the fixing means may additionally serve to electrically connect the first transducer to the electronic circuit on the circuit board. An advantage of fixing means might be that it enables further fixation of the ultrasound transducer. If the fixing means is electrically conductive, it might further serve as an electrical connection to the ultrasound transducer. A possible advantage of this might be that the circuit board and the fixing means in this way serve as both position means and holder for the ultrasound transducer. By this, the ultrasound transducer holder is integrated into the circuit board and eliminated as a component, as is the procedure of establishing electrical connection between the ultrasound transducer and the circuit board. Further, the electrical connection between the circuit board and the ultrasound transducer is established before the final assembly procedure, and so testing of the functionality can be done before the final assembly procedure takes place. In case of malfunction, the product can be scrapped before the cost of the final assembly procedure is added, potentially lowering the overall production costs.

In one embodiment, separate first and second parts of the fixing member serve to provide respective first and second electrical connections between the ultrasound transducer and the circuit board. In special embodiments one or more electrical connections are made using Surface Mounted Device (SMD) technology or a similar automated manufacturing process, hereafter in general referred to as SMD technology. The circuit board can be preassembled in an SMD machinery, capable of soldering other electrical components onto the circuit board, including the ultrasound transducer. Especially, the ultrasound transducer may be provided with a thin, sheet steel membrane pre-glued onto the surface in contact with the fluid flow. In such a process, the positioning of the ultrasound transducer can be done with the accuracy of the SMD machinery, which is measured in the order of fractions of a millimetre, such as below 1.0 mm, such as below 0.1 mm, possibly even below 0.01 mm, and the electrical connection between the ultrasound transducer and the circuit board is established. Furthermore, the use of e.g. SMD machinery for providing the electrical connections to the ultrasound transducer serves to eliminate the need for wire connections between circuit board and transducer. Wire connections in an automated assembly line make up a subject of difficulty. An advantage of mounting one or more ultrasound transducers directly on the circuit board makes the circuit board suitable for testing prior to final assembly of the flow meter.

In a preferred embodiment the first ultrasound transducer is arranged to emit ultrasonic signals in a direction substantially perpendicular to a direction of fluid in the measurement tube of the ultrasound flow meter. This can enable a compact flow meter, particularly if the flow direction in the measuring tube is parallel with a plane defined by the circuit board.

In another preferred embodiment the ultrasound flow meter further comprises a second ultrasound transducer, wherein the circuit board is arranged for operating the second ultrasound transducer, and wherein a second set of at least two points on an edge of the circuit board serve to limit relative movement between the second ultrasound transducer and the circuit board in a direction along a line spanned by the second set of at least two points. An advantage of having first and second ultrasound transducers where both first and second ultrasound transducers have their relative movement with respect to the circuit board limited, might be that the relative movement between the two ultrasound transducers can also be limited.

In one embodiment the circuit board serves to determine a distance between the first and second ultrasound transducers when placed adjacent to the respective first and second sets of at least two points, and wherein said distance matches a distance between corresponding first and second transducer receiving positions of the housing. A possible advantage of this is that the distance between the ultrasound transducers is defined by the circuit board; hence once the ultrasound transducers are mounted on the circuit board, the predetermined distance between them is simultaneously given. The first and second ultrasound transducers might be fixed to the circuit board by respective first and second parts of the fixing members. The circuit board and the fixing member might serve to fix the first and second ultrasound transducers in position relative to each other, and wherein a distance between the first and second ultrasound transducers matches a distance between corresponding first and second transducer receiving positions of the housing. An advantage of this is that once the transducers are fixed to the circuit board, the positioning of the transducers relative to the housing can be done when fixing the circuit board relative to the housing. Fixing of the transducers to the circuit board can be done with high precision, such as with the precision obtained in an SMD mounting process. Furthermore, if the distance between transducers matches a distance between transducer receiving positions of the housing, the alignment of the transducers to the transducer receiving positions of the housing can be carried out together with the fixing of the circuit board in relation to the housing. In a special embodiment, the two ultrasound transducers share a common protection membrane, e.g. a metal sheet. More specifically, such common protection membrane may form part of a water-tight casing for housing the mechanically separate unit. Especially, such membrane may form part of a watertight casing around the circuit board and transducers.

In another embodiment the circuit board comprises an edge, such as a circumferential edge or an edge of a hole in the circuit board, serving to engage with a corresponding protrusion of the housing so as to limit relative movement between the circuit board and the housing. A possible advantage of this is that the position of the circuit board with respect to the housing can relatively easily be controlled. Furthermore, once one or more ultrasound transducers have their position with respect to the circuit board defined, their position will also be defined with respect to the housing. In an alternative embodiment, the circuit board comprises a protrusion which can engage with a corresponding edge of the housing.

In an embodiment the housing of the ultrasound flow meter is formed by metal, such as brass or stainless steel, or by a polymeric material. An advantage of a polymeric material is that it is possible to avoid openings in the housing for the ultrasound transducers, since an ultrasonic signal can be transmitted through a polymer material with the right physical and dimensional properties, i.e. according to the so-called matching layer principle. Sealing can thus be eliminated, resulting in improved imperviousness of the flow meter, and the pressure forces from the fluid flow will not load the ultrasound transducers but the flow meter housing only.

In a second aspect, the invention provides a consumption meter comprising a flow meter according to the first aspect, wherein the consumption meter is one of: a heating meter, a cooling meter, a water meter, or a gas meter.

In a third aspect, the invention provides a method of manufacture of an ultrasound flow meter, the method comprising
- providing a circuit board with an electronic circuit arranged for operating a first ultrasound transducer,
- shaping an edge of the circuit board so as to provide at least two points serving to limit relative movement between the first transducer and circuit board in a direction along a line spanned by the two points,
- placing the first transducer with its boundary adjacent to the two points, and
- mounting the circuit board and the first ultrasound transducer in relation to a housing, such as a housing with a measuring tube arranged inside.

An advantage of this assembly procedure is that it can be very easily performed and that it can be automated. As only few steps and handling of only few components are required, the process can be carried out in short time. Another advantage might be that the method is suited for manufacturing a separate unit comprising circuit board, electronics and one or more ultrasound transducer, the unit being accessible for testing prior to mounting the circuit board in relation to the housing.

A specific method of manufacturing comprises mounting the first ultrasound transducer to the circuit board by means of one or more clips, such as metal clips. This assembly procedure is simple yet with good positioning accuracy. Few different components are used, and few assembly procedures are involved.

A specific method of manufacture comprises fixing the first ultrasound transducer to the circuit board prior to mounting the circuit board in relation to the housing, such as by means of soldering the first transducer to conducting paths of the circuit board, such as fixing the first ultrasound transducer to the circuit board by means of a Surface Mounting Device soldering process. A possible advantage of using a Surface Mounting Device soldering process is that it can be done automatically with high precision. The accuracy of positioning is in the order of fractions of a millimetre, such as below 1.0 mm, such as below 0.1 mm, possibly even below 0.01 mm. Another advantage is that the electrical connection between the circuit board and the at least one ultrasound transducer can be established in connection with mounting. Thus, a cheap, fast, precise method of manufacture, which is not labour intensive, might be devised.

Another preferred method of manufacturing comprises a step of testing a function of the mechanically separate unit prior to mounting the mechanically separate unit to the housing arranged for fluid flow. This method of manufacturing is advantageous since testing the function of the mechanically separate unit before mounting the mechanically separate unit to a housing arranged for fluid flow can reveal malfunction. In case of malfunction the product can be scrapped before the cost of the assembly procedure is added and this potentially lowers the overall production costs.

Yet another preferred method of manufacturing includes mounting first and second ultrasound transducers relative to the circuit board by means of respective first and second parts of the fixing member.

When referring to an advantage, it must be understood that this advantage may be seen as a possible advantage provided by the invention, but it may also be understood that the invention is particularly, but not exclusively, advantageous for obtaining the described advantage.

It is appreciated that advantages described for the first aspect applies as well for the second and third aspects. Further, embodiments of the first aspects may in any way be combined with the second and third aspect.

These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1A illustrates a mechanically separate unit comprising a circuit board and two ultrasound transducers positioned within a plane defined by the circuit board,
Fig. 1B illustrates a circuit board and two ultrasound transducers prior to assembly,
Fig. 2A illustrates an ultrasound flow meter with a flow meter housing made of polymer and a mechanically separate unit comprising a circuit board and two ultrasound transducers,
Fig. 2B shows an exploded view of the ultrasound flow meter illustrated in Fig. 2A,
Fig. 3A illustrates an ultrasound flow meter with a flow meter housing made of polymer and a mechanically separate part comprising a circuit board and two ultrasound transducers, and
Fig. 3B shows an exploded view of the ultrasound flow meter illustrated in Fig. 3A,
Figs. 4-8 show embodiments with different circuit board and transducer shapes of an ultrasound flow meter where the two points are provided on a peripheral edge of the circuit board,
Figs. 9-11 show embodiments with different circuit board and transducer shapes of an ultrasound flow meter where the two points are provided on meter with through-going holes,
Figs. 12-15 show embodiments of a circuit board and transducer where the at least two points are provided on the edge of a recess in the circuit board,
Figs. 16A and 16B show embodiments of a circuit board with multiple protrusions.
Figs. 17A-C illustrate in an example how the ultrasound transducer is capable of moving between two points on an edge of the circuit board, thus providing the relative movement limiting effect for positioning of the ultrasound transducer within a predetermined tolerance.

### DESCRIPTION OF EMBODIMENTS

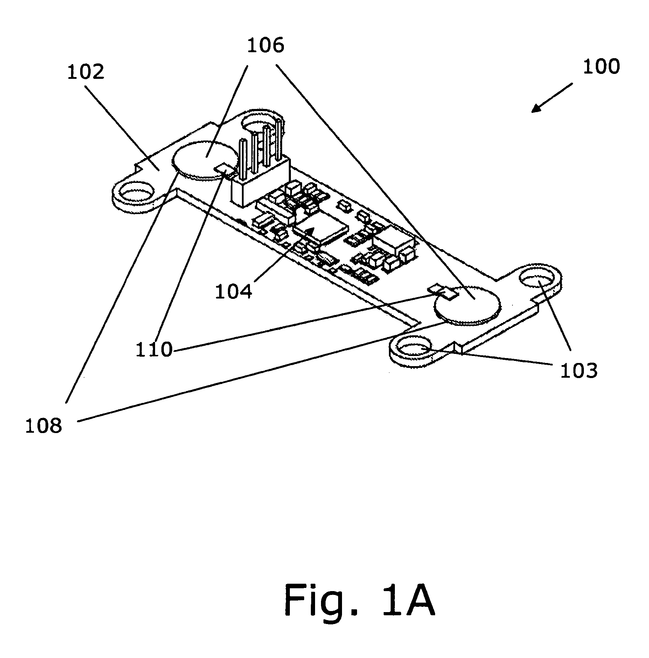

Fig. 1A shows a perspective view of a mechanically separate unit 100 comprising a circuit board 102 with an electronic circuit 104 with Surface Mounted Device (SMD) components and with piezoelectric ultrasound transducers 106 mounted such that a plane defined by the circuit board intersects through the ultrasound transducers. Furthermore, the circuit board 102 is provided with holes 103, serving to engage with corresponding protrusions of the housing so as to limit relative movement between the circuit board 102 and the housing. The ultrasound transducers in the shown embodiment are mounted in respective through-going holes 108 of the circuit board with an edge shaped to fit a part of the ultrasound transducers. However, other embodiments could have cavities, which are not through-going. The edge of the circuit board fixes the position of the ultrasound transducer in relation to the circuit board. Furthermore, in the shown embodiment metallic clips form first part of a fixing member 110 which serves to further fix the position of the ultrasound transducers in relation to the circuit board. The first part of the fixing member is electrically conductive and serves to electrically connect the circuit board and the ultrasound transducers. The shown embodiment also features through-going holes 103 serving to enable fixing relative to a housing.

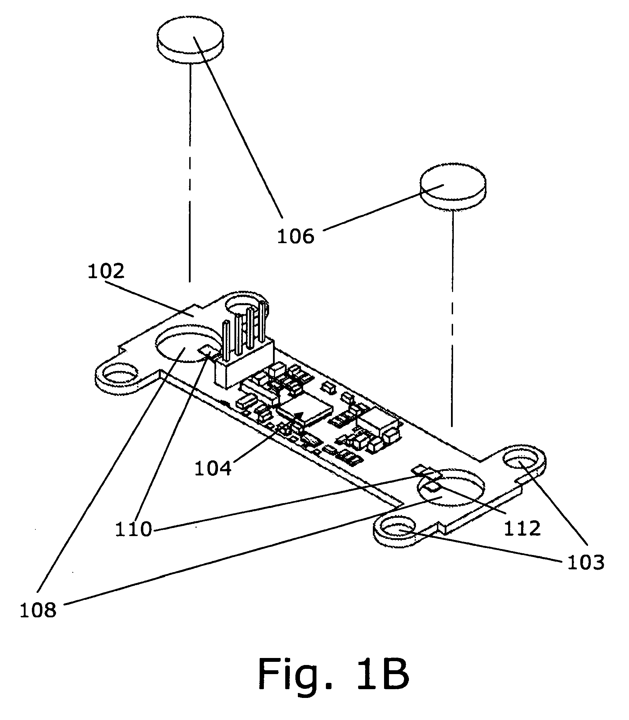

Fig. 1B shows a perspective view of a circuit board 102 as in Fig. 1A, but prior to mounting of the ultrasound transducers 106 onto the circuit board 102. A first part of a fixing member 110 also serves to fix the position of the ultrasound transducers in relation to the circuit board 102. Furthermore, metallic clips form a second part of a fixing member 112. The separate first and second parts of the fixing member serve to provide first and second electrical connections between the ultrasound transducers and the circuit board, and thus form the connections necessary for driving the ultrasound transducer by applying a temporally varying voltage, such as an AC voltage, across each transducer. By mounting the ultrasound transducer during the manufacturing of the PCB the number of steps in an assembly procedure is minimized. The procedure of establishing electrical connection between the ultrasound transducer and the circuit board is being highly repeatable, with the disadvantages of the wire connections normally used for connecting the ultrasound transducer with the circuit board eliminated. This would lower the scrap percentage of the overall assembly significantly since the handling of wire connections in an automated assembly line is a subject of difficulty, and the electrical connection between the circuit board and the ultrasound transducer is established before the assembly procedure allowing testing of the functionality to be made before the assembly procedure takes place.

In case of malfunction, the product can be scrapped before the cost of the assembly procedure is added, potentially lowering the overall production costs.

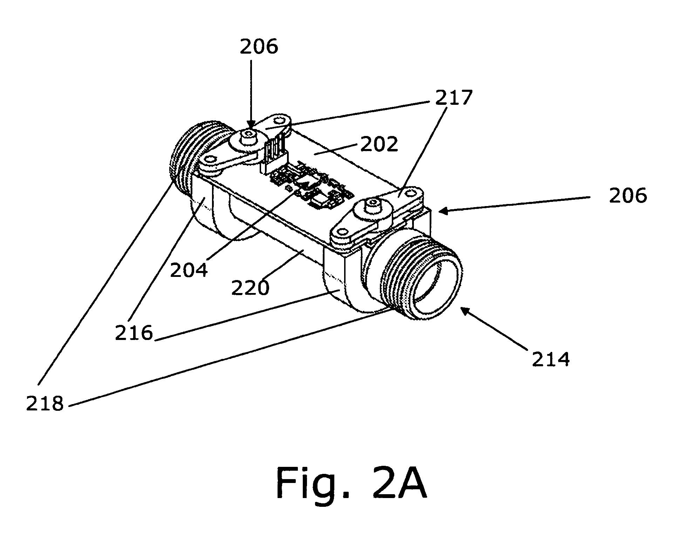

Fig. 2A shows a perspective view of an ultrasound flow meter with a flow meter housing 220, with a measuring tube 214 adapted for fluid flow inside, and a mechanically separate part comprising a circuit board 202 with an electronic circuit 204 and two piezoelectric ultrasound transducers 206. The mechanically separate unit comprising the transducers and the circuit board is fixed to the housing 220 with lower bracing 216 and upper bracing 217 in order to ensure that enough force is applied to the transducers in the direction towards a centre line of the measuring tube in the housing in order to counteract the force applied in the opposite direction from the pressure of the fluid inside the housing during operation. Each end of the flow meter housing 220 is provided with threading 218 in order to facilitate mounting onto adjacent pipelines. The electronic circuit 204 is provided with external connections in the form of pins enabling the electrical connection to other electronic circuits, such as calculator units, power supplies and telecommunication units. Alternatively, a wireless connection could be used.

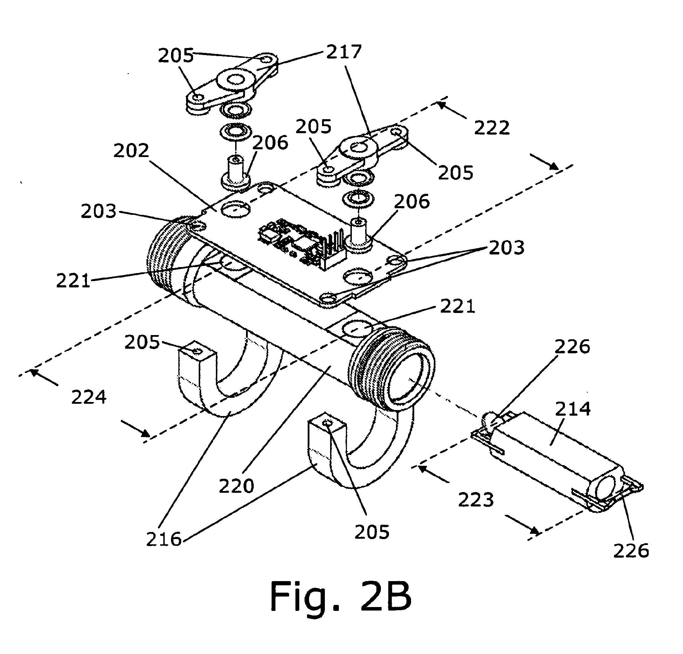

Fig. 2B shows an exploded view of an ultrasound flow meter similar to the ultrasound flow meter shown in Fig. 2A. The figure shows the components of the ultrasound flow meter, including bracing components, ultrasound transducers, the circuit board 202 and the flow meter housing 220. Furthermore, two reflector units 226 are shown, with measuring tube engagement means for engaging with the measuring tube 214. A distance 222 is shown, which represents a distance between the positions on the circuit board where the first and second of the two ultrasound transducers are fixed. The distance 222 is substantially similar to the distance 224, the latter representing a distance between a first and a second transducer receiving position of the housing. A distance 223 between the mirrors is preferably similar to the distance 222 and the distance 224. Furthermore, the circuit board 202 is provided with holes 203, serving to engage with corresponding engagement means 205, such as threaded holes, of the lower bracing 216 and/or upper bracing 217 so as to limit relative movement between the circuit board 202 and the lower bracing 216 and upper bracing 217. Thus, once the lower bracing 216 and/or upper bracing 217 is positioned relative to the housing 220, then the circuit board 202 and hence the ultrasound transducers can also be positioned in a well defined manner relative to the housing 220. The lower bracing 216 and upper bracing 217 serve to apply a force to the ultrasound transducer, so as to press the ultrasound transducers against the housing. In the present embodiment, a polymeric housing 220 is shown which has non-through going holes 221 as the first and a second transducer receiving position of the housing. The material of the housing which is penetrated by the ultrasound signals to and from the ultrasound transducers 206 is known as a matching layer.

Considering ultrasound flow meters with polymeric housings, which in most cases would be formed by injection moulding for the inclusion of numerous details, the support by bracings or other stiffening elements for the ultrasound transducers is not required if the pressure from the fluid flow is not affecting the ultrasound transducers due to the matching layer principle. However, still the transducers need to be attached to the housing surface, e.g. using a signal conductive material such as glue or silicone. Hence, the assembly procedure for an ultrasound flow meter with polymeric housing can be done even simpler than with ultrasound flow meters with metallic housings, since fewer components are to be involved. Designing a polymeric flow meter housing with mounting means such as a snapping feature or holes for screws for the circuit board used for controlling the ultrasonic transducers, the circuit board can be rapidly mounted with high accuracy of the positioning, which can be of particular relevance when using the circuit board to position the ultrasound transducers.

In an embodiment of the invention, a polymeric flow meter housing as described is considered, a circuit board designed with an opening such as a hole or other geometric feature is mounted in the flow meter housing and the ultrasound transducers placed in the openings of the circuit board that in this way serves as both position means and holder for the ultrasound transducers. An ultrasonic signal conductive material such as silicone or glue is used between the housing surface and the ultrasound transducer. Electrical connection between the ultrasound transducers and the circuit board is established by means of soldering the ends of the ultrasound transducer conductors onto the circuit board; by snapping these into a plug connection or by mechanical connection such as a spring loaded clamp or screwed connection.

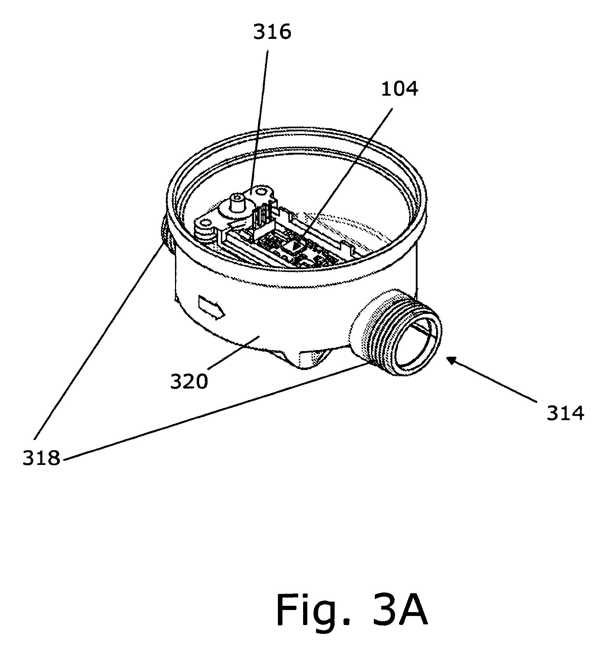

Fig. 3A shows a perspective view of an ultrasound flow meter with a polymeric flow meter housing 320, with a measuring tube 314 adapted for fluid flow inside, and a mechanically separate part comprising a circuit board with an electronic circuit 104 and piezoelectric ultrasound transducers. The polymeric flow meter housing 320 is monolithically formed in a moulding process and is enclosing a cavity suited for containing components, such as the electronic circuit 104. The mechanically separate unit comprising the transducers and the circuit board is clamped to the housing 320 with bracing 316. Each end of the flow meter housing is provided with threading 318 in order to facilitate mounting onto adjacent pipelines. The electronic circuit 104 is provided with external connections in the form of pins enabling the electrical connection to other electronic circuits, such as calculator units, power supplies and telecommunication units. Alternatively, a wireless connection could be used.

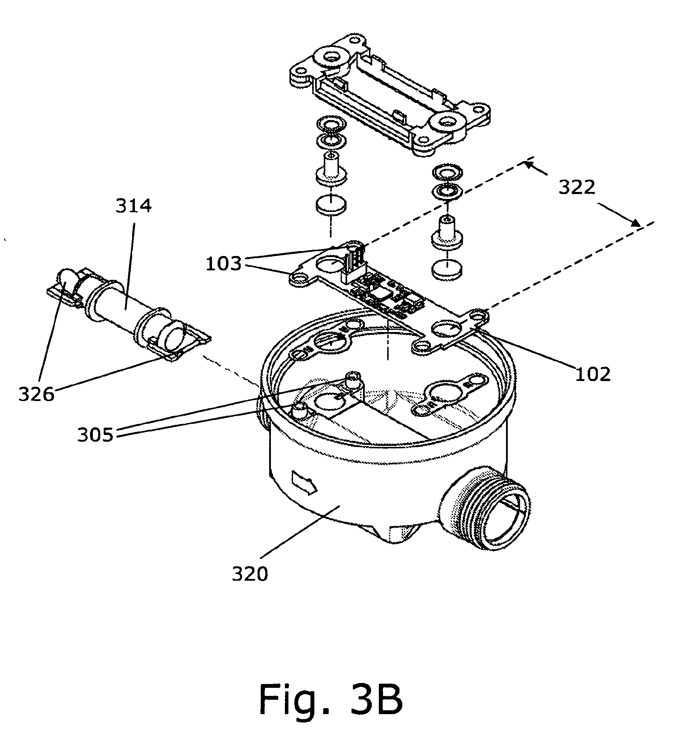

Fig. 3B shows an exploded view of an ultrasound flow meter similar to the ultrasound flow meter shown in Fig. 3A. The figure shows the components of the ultrasound flow meter, including bracing components, ultrasound transducers, the circuit board 102 and the flow meter housing 320. Furthermore, two reflector units 326 are shown, with measuring tube engagement means for engaging with the measuring tube 314. Still further, the circuit board 102 is provided with holes 103, serving to engage with corresponding engagements means 305, of the housing 320 so as to limit relative movement between the circuit board 102 and the housing 320. In this illustration the engagement means are in the form of protrusions 305 monolithically formed with the polymeric housing 320 and serving to engage with the holes 103 of the circuit board 102 so as to fix the position of the circuit board 102 and thus the ultrasound transducers in relation to the housing 320. Thus, once the circuit board 102 is positioned relative to the housing 320, then the ultrasound transducers are also positioned in a well defined manner relative to the housing. A distance 322 is shown, which represents a distance between the positions on the circuit board where the first and second of the two ultrasound transducers are fixed. The distance 322 is substantially similar to a distance between a first and second transducer receiving position of the housing, and further the distance 322 is preferably also similar to a distance between the ultrasound reflectors 326.

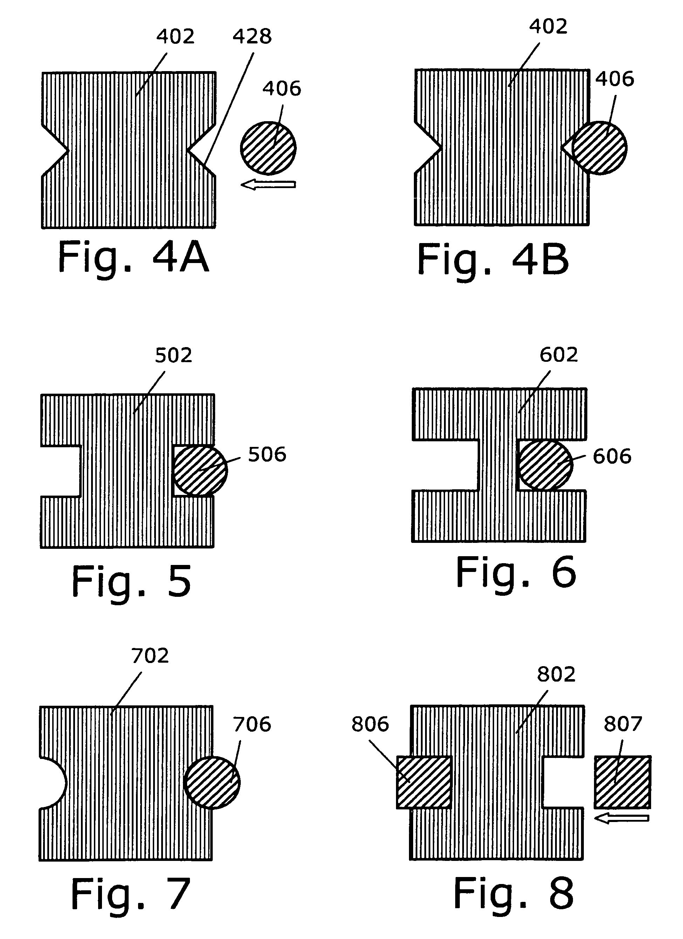

Figs. 4A and 4B show a circuit board 402 with an edge 428 and an ultrasound transducer 406. The peripheral edge of the circuit board is shaped such that two points on this edge serve to limit relative movement between the first ultrasound transducer and the circuit board in a direction along a line spanned by the two points, when the ultrasound transducer is placed adjacent to the two points. In Fig. 4A, the ultrasound transducer and the circuit board are shown separated. Fig. 4B shows a situation where the ultrasound transducer is placed adjacent to the two points of the edge of the circuit board. If the ultrasound transducer were to move along a line from the one point towards the other, it would face contact forces and vice versa, and hence the relative movement between the first ultrasound transducer and the circuit board is limited due to contact forces in a direction along a line spanned by the two points.

Fig. 5 shows an embodiment where the ultrasound transducer 506 is placed adjacent to three points on the edge of the circuit board 502. In this embodiment, a geometrical figure circumscribing the circuit board will intersect the ultrasound transducer if the circumference of the figure is minimized.

Fig. 6 shows an embodiment where the ultrasound transducer 606 is placed adjacent to three points on the edge of the circuit board 602. In this embodiment, the ultrasound transducer will be completely inside a geometrical figure circumscribing the circuit board if the circumference of the figure is minimized.

Fig. 7 shows an embodiment of the circuit board 702, wherein a portion of the edge of the circuit board is shaped to fit a portion of an outline of the first ultrasound transducer 706. In the shown embodiment the outline of the first ultrasound transducer is circular, and the circuit board has a semicircular indentation. Thus, in principle, this embodiment has an infinite number of points on the edge of the circuit board which serve to limit relative movement between the first ultrasound transducer and the circuit board in a direction along a line spanned by any two points within the infinite number of points. In effect, this limits any motion in the plane of the drawing, unless it is directed directly towards the right-hand side.

Fig. 8 shows an embodiment where quadratic ultrasound transducers 806, 807 fit into respective incisions in the periphery of the circuit board.

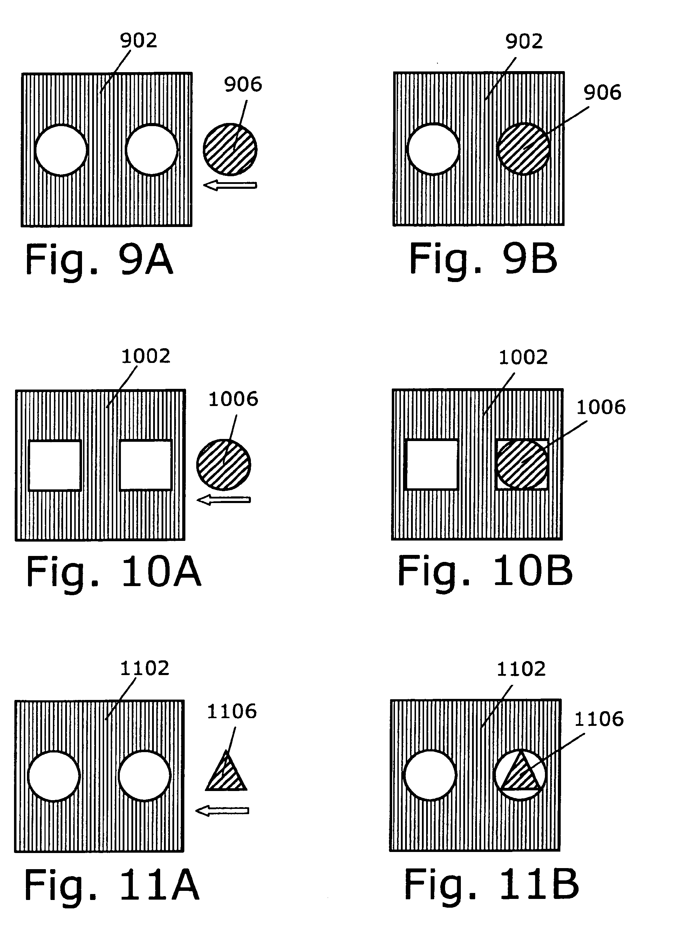

Fig. 9-11 show various embodiments wherein the two points are situated on an edge, such as a single edge, which forms a boundary of a hole in the circuit board.

Figs. 9A and 9B show a circular ultrasound transducer 906 and a circuit board 902 with circular holes shaped to fit the outline of the first ultrasound transducer.

Figs. 10A and 10B show a circular ultrasound transducer 1006 and a circuit board 1002 with quadratic holes shaped such as to form the shape of a square circumscribing the circular ultrasound transducer 1006.

Figs. 11A and 11B show a triangular ultrasound transducer 1106 and a circuit board 1102 with circular holes shaped such as to form the shape of a circle circumscribing the triangular ultrasound transducer 1106.

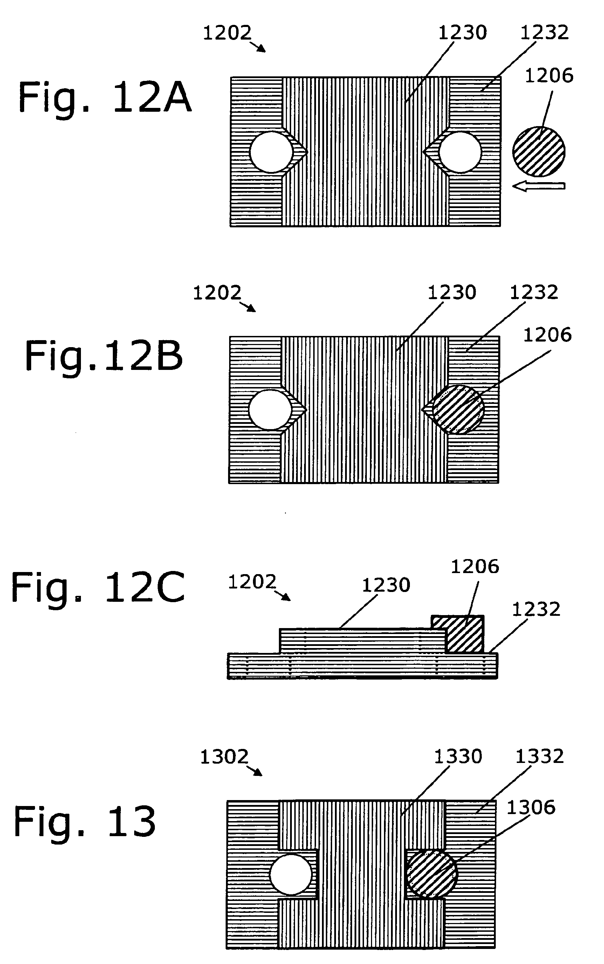

Figs. 12A-C show an embodiment with a circuit board 1202 and an ultrasound transducer 1206, where the circuit board has two levels, both of these levels having a surface parallel to the plane of the paper (Figs. 12A,12B), but one being displaced with respect to the other. The upper level with a surface 1230, which is closest to the viewer in Figs. 12A and 12B, is indicated by vertical stripes. The lower level with a surface 1232 is indicated with horizontal stripes. In Fig. 12A, the circuit board 1202 can be seen separated from the first ultrasound transducer 1206. The upper level of the circuit board is shaped such that two points on the edge of the upper level serve to limit relative movement between the first ultrasound transducer and the circuit board in a direction along a line spanned by the two points, when the ultrasound transducer is placed adjacent to the two points. In Fig. 12B the ultrasound transducer is placed adjacent to the two points of the edge of the upper level of the circuit board. If the ultrasound transducer were to move along a line from the one point towards the other, it would face contact forces and vice versa, and hence the relative movement between the first ultrasound transducer and the circuit board is limited due to contact forces in a direction along a line spanned by the two points.

Fig. 12C shows a side view of the circuit board 1202 and ultrasound transducer 1206 depicted in Fig. 12B. Notice that a through-going hole is shown in Fig. 12A, the through-going hole is marked by a dotted line in Fig. 12B, where the ultrasound transducer 1206 is in a position where it covers the through-going hole. In this embodiment, the through-going hole is advantageous if the ultrasound transducer is placed between the measuring tube and the circuit board, the trough-going hole might also be useful, as it allows a force to be applied directly onto the ultrasound transducer, e.g., an opening in the circuit board makes it possible to let bracing support the ultrasound transducer.

Fig. 13 shows an embodiment similar to that of Fig. 12, but where the incisions in circuit board 1302 are differently shaped. As in Fig. 12 the circuit board has two levels indicated by respective vertical and horizontal stripes. The upper level of the circuit board is shaped with a rectangular indentation in its outer periphery, such that three points on the edge of the upper level serve to limit relative movement between the first ultrasound transducer and the circuit board in a direction along any line spanned by two of the three points, when the ultrasound transducer is placed in the indentation adjacent to the three points. Fig. 13 shows a situation where the ultrasound transducer is placed adjacent to the three points of the edge of the upper level of the circuit board.

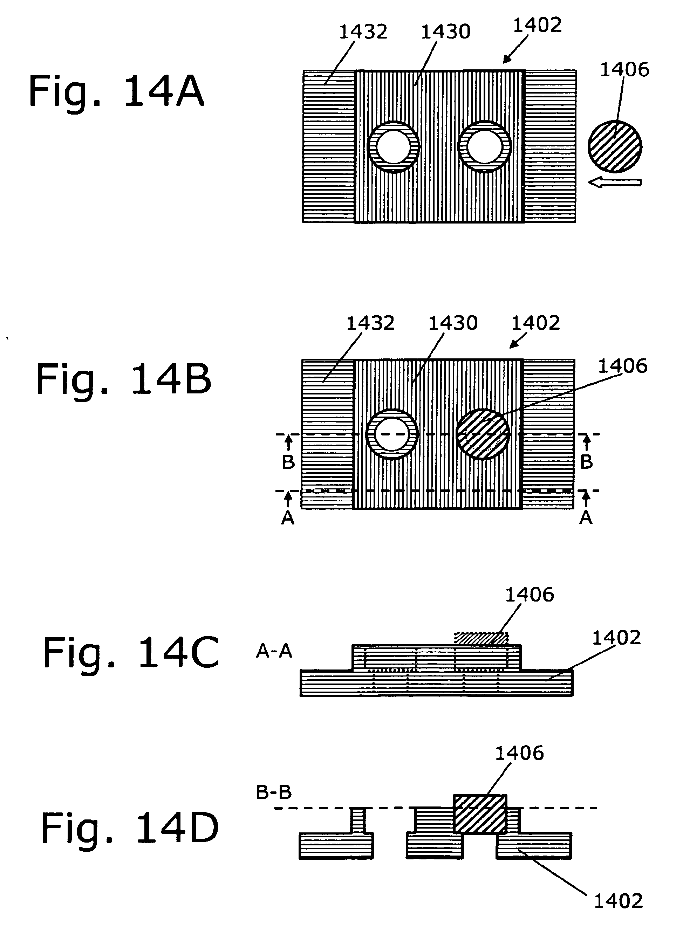

Figs. 14A-D show an embodiment with a circuit board 1402 and an ultrasound transducer 1406. As in Figs. 12 and 13, the circuit board has two levels indicated by respective vertical and horizontal stripes. In Fig. 14A, the circuit board 1402 can be seen separated from the first ultrasound transducer 1406. The circuit board has a recess with a size and shape matching the ultrasound transducer, such that the edge of the recess serve to limit relative movement between the first ultrasound transducer and the circuit board in any direction along a line spanned by any two points on the edge of the recess where the ultrasound transducer is placed. In Fig. 14A, the ultrasound transducer and the circuit board are shown separated. Fig. 14B shows a situation where the ultrasound transducer is placed in the recess in the circuit board. Notice that a through-going hole is shown in Fig. 14A, the through-going hole is marked by a dotted line in Fig. 14B, where the ultrasound transducer 1406 is in a position where it covers the through-going hole. Alternatively, if the ultrasound transducer is placed between the measuring tube and the circuit board, the through-going hole might also be useful, as it allows a force to be applied directly onto the ultrasound transducer, e.g. an opening in the circuit board makes it possible to let bracing support the ultrasound transducer. If the ultrasound transducer were to move along any line in the plane of the paper, it would face contact forces, and hence the relative movement, between the first ultrasound transducer and the circuit board in the plane of the paper, would be limited. Furthermore, since this particular embodiment has a recess of size and shape matching the ultrasound transducer, and not a through-going hole of size and shape matching the ultrasound transducer, the ultrasound transducer in figure 14B is also restricted from moving in a direction into the paper. Hence, in the figure its movement in any direction, except directly out of the paper, is hindered by contact forces arising from contact with the circuit board.

Fig. 14C shows a section view A-A of the circuit board 1402 and ultrasound transducer 1406 as indicated in Fig. 14B.

Fig. 14D shows a section view B-B of the circuit board 1402 and ultrasound transducer 1406 as indicated in Fig. 14B. Notice that a plane defined by a surface of the circuit board intersects the first ultrasound transducer. This is indicated by the dotted line which coincides with a surface of the circuit board, namely the upper level, which in figures 14A and 14B was indicated with reference sign 1430. The plane further intersects with the ultrasound transducer 1402.

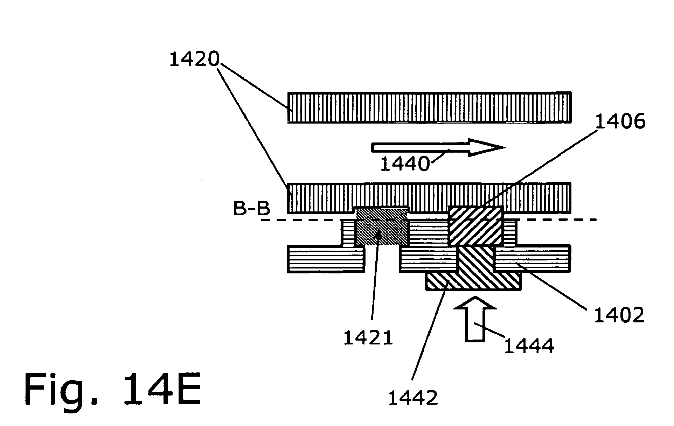

Fig. 14E also shows a section view similar to that shown in Fig. 14D. However, also shown are the walls of an adjacently placed housing 1420, an arrow 1440 shows a direction of flow of a fluid inside housing 1420, a non-through-going hole 1421 in the outer side of the housing 1420 adapted fit an ultrasound transducer such as the ultrasound transducer 1406 shown on the right hand side of the figure. Further shown is a member 1442 through which a force is applied to the ultrasound transducer 1406 in the direction of the arrow 1444, so as to press the ultrasound transducer 1406 against the housing 1420.

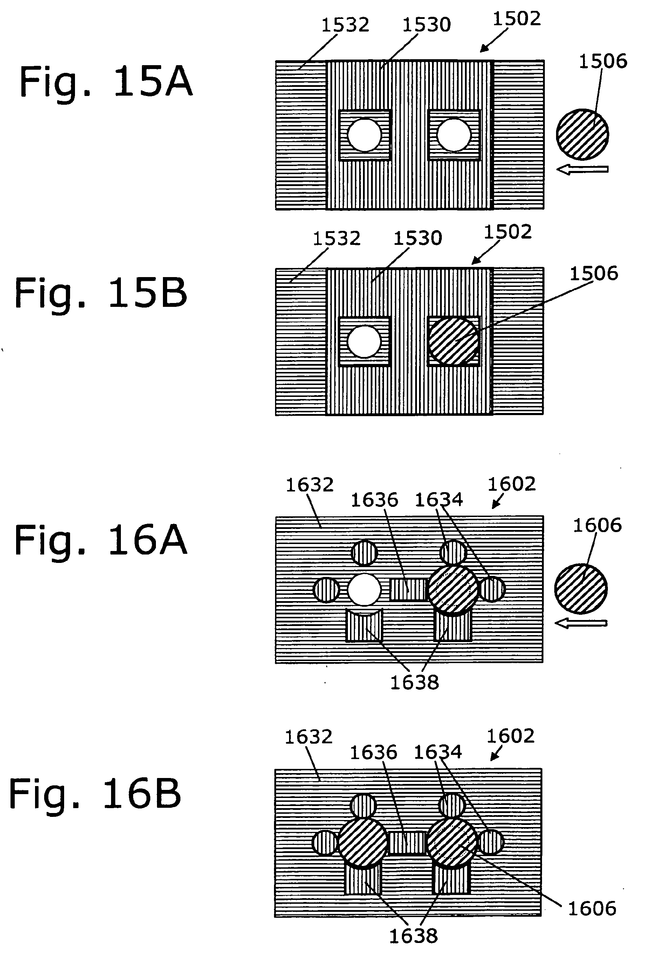

Figs. 15A-B show an embodiment with a circuit board 1502 and an ultrasound transducer 1506. As in Figs. 12-14, the circuit board has two levels indicated by respective vertical and horizontal stripes. In Fig. 15A, the circuit board 1502 can be seen separated from the first ultrasound transducer 1506. The circuit board has a recess with a square shape sized to circumscribe the circular transducer 1506, such that the edge of the recess serve to limit relative movement between the first ultrasound transducer and the circuit board in any direction along a line spanned by any two points out of the four contact points on the edge of the recess where the ultrasound transducer is placed. In Fig. 15A, the ultrasound transducer and the circuit board are shown separated. Fig. 15B shows a situation where the ultrasound transducer is placed in the recess in the circuit board.

Figs. 16A and 16B show an embodiment with a circuit board 1602 and an ultrasound transducer 1606 where the points, serving to limit relative movement between the first ultrasound transducer and the circuit board in a direction along a line spanned by any of two of the points, are situated on separate edges of the circuit board, namely on protrusions formed on a surface of the circuit board. As in Figs. 12-15, two levels are indicated by respective vertical and horizontal stripes. Structures 1634, 1636, 1638 with surfaces in the upper level, which is closest to the viewer, are denoted with vertical stripes. The lower level with a surface 1632, which is longer away from the viewer, is denoted with horizontal stripes. In Fig. 16A, the circuit board 1602 can be seen separated from the first ultrasound transducer 1606. In this particular embodiment, the separate edges are edges of protrusions 1634, 1636, 1638 on the circuit board. The protrusions might have any shape, such as circular 1634, elliptical, rectangular 1636, square or with a portion shaped to match a portion of the outline of the ultrasound transducer 1638. The protrusions might further serve as electrical connections to the ultrasound transducers. Furthermore, the protrusions might be elastic or have elastic properties, such as one or more protrusions being springs. It is to be understood that the circuit board may include further electronic parts from the measurement circuit serving to operate the transducers, e.g. the circuit board may include electronics for calculating a consumed value based on the flow rate. Such embodiment is suited, e.g. for a water meter.

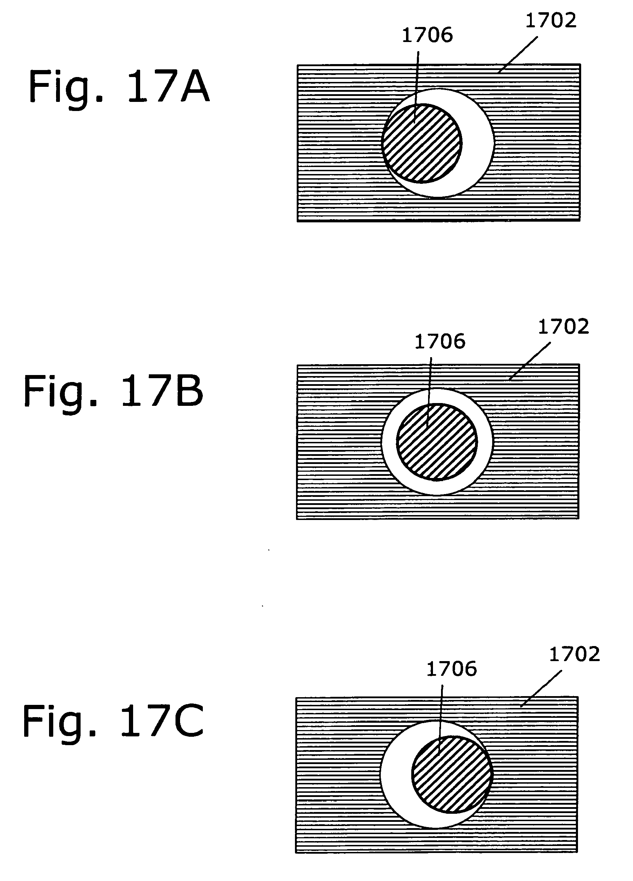

Figs. 17A-C serve to illustrate that the first ultrasound transducer 1706 is capable of moving between at least two points on an edge of the circuit board 1702, during manufacturing, and still the at least two points serve to limit relative movement between the transducer 1706 and the circuit board 1702 within a given selectable tolerance. In particular, in the specific embodiment shown, a transducer 1706 with a circular cross section in the plane of the circuit board 1702 is located in a circular, through-going hole in the circuit board 1702. The diameter of the transducer 1706 is smaller than the diameter of the through-going hole. In Fig. 17A the transducer 1706 is placed in the left side of the hole, in physical contact with the circuit board 1702, namely on a point on the left side of the edge of the through-going hole. In Fig. 17B the transducer 1706 is placed in the middle of the hole, without being in physical contact with any point on the edge of the through-going hole. In Fig. 17C the transducer 1706 is placed in the right side of the hole, in physical contact with the circuit board 1702, namely on a point on the right side of the edge of the through-going hole, thus being restricted from moving further to the right along a line spanned between the respective two points of contact in Figs. 17A and 17C. Likewise, in Fig. 17A the transducer 1706 is restricted from moving further to the left. Thus, even though the transducer 1706 is not in direct physical contact with any of the two points on the edge of the circuit board 1702, as shown in Fig. 17B, or only in physical contact with one point, as shown in Figs. 17A and 17C, the at least two points still ensure the limitation of the relative movement between the transducer 1706 and the circuit board 1702 in a direction along a line spanned by the two points. Thus, it is to be understood that the transducer 1706 need not be in contact with any of the at least two points on an edge of the circuit board 1702 in order to obtain the limitation of the relative movement between the transducer 1706 and the circuit board 1702 in a direction along a line spanned by the two points.

It is to be understood that the diameter in the through-going hole can be selected such in relation to an outer dimension of the transducer 1706, e.g. diameter of the transducer 1706, such that the position of the transducer 1706 is restricted within a desired tolerance. Hereby, automated manufacturing is facilitated, since a robot can be used to pick up the transducer 1706 and place it precisely enough to fit in the hole, or in general to fit the in relation to the edge of the circuit board 1702 such that the transducer 1706 has a position which is fixed, within a desired limit, in relation to the circuit board 1702. The step of fixing or attaching the transducer 1706 to the circuit board 1702 is then facilitated, thus resulting in a precisely positioned transducer 1706, still in a simple manufacturing process suited for automation.

To sum up, the invention provides an ultrasound flow meter for ultrasonic measurement of a fluid flow, the meter comprising a housing with a measuring tube inside, an ultrasound transducer 106, and a circuit board 102. The circuit board is shaped such that at least two points on an edge of the circuit board, e.g., an edge of a through-going hole 108, serve to limit relative movement between the first ultrasound transducer and the circuit board in a direction along a line spanned by the two points, such that the circuit board serve to confine the ultrasound transducer between the to points. In a specific embodiment, fixing means 110, 112, such as solder, e.g. Surface Mount Technology (SMD) soldering, a clip 110, 112 or bracing are arranged on the circuit board, which can fix the first ultrasound transducer to the circuit board and possibly simultaneously serve as electrical connections. In addition, the invention provides a method of manufacture of said ultrasound flow meter.

In this section, certain specific details of the disclosed embodiments are set forth for purposes of explanation rather than limitation, so as to provide a clear and thorough understanding of the present invention. However, it should be understood readily by those skilled in this art, that the present invention may be practised in other embodiments which do not conform exactly to the details set forth herein, without departing significantly from the scope of this disclosure defined by the accompanying claims. Further, in this context, and for the purposes of brevity and clarity, detailed descriptions of well-known apparatus, circuits and methodology have been omitted so as to avoid unnecessary detail and possible confusion.
In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality, Thus, references to "a", "an", "first", "second" etc. do not preclude a plurality. Reference signs are included in the claims however the inclusion of the reference signs is only for clarity reasons and should not be construed as limiting the scope of the claims.

## Claims

1. An ultrasound flow meter arranged to measure a flow rate of a fluid flowing through a measuring tube, the flow meter comprising
- a housing (220) with the measuring tube (214) arranged inside, and
- a first ultrasound transducer (106, 206), and
- a circuit board (102, 202) with an electronic circuit (104, 204) arranged for operating the first ultrasound transducer (106, 206), **characterized in that** the circuit board is shaped so that at least two points on an edge of the circuit board serve to limit relative movement between the first ultrasound transducer and the circuit board in a direction along a line spanned by the two points.

2. Ultrasound flow meter according to claim 1, wherein the edge forms part of a circumferential boundary of the circuit board.

3. Ultrasound flow meter according to claim 1 or 2, wherein a portion of the edge is shaped to fit a portion of an outline of the first ultrasound transducer.

4. Ultrasound flow meter according to any of the preceding claims, wherein a plane defined by a surface of the circuit board intersects the first ultrasound transducer.

5. Ultrasound flow meter according to any of the preceding claims, wherein the two points are situated on a single edge which forms a boundary of a hole in the circuit board, such as the edge forming a boundary of a recess in the circuit board.

6. Ultrasound flow meter according to claim 5, wherein the hole is a through-going hole in the circuit board, such as a through-going hole shaped to fit around the first transducer, such as a through-going hole having a different shape than the first transducer, such as a through-going hole having a shape matching a shape of the first transducer.

7. Ultrasound flow meter according to claim 5 or 6, wherein the first ultrasound transducer has a circular shape, and wherein the hole has a shape being one of: circular, triangular, and rectangular.

8. Ultrasound flow meter according to any of the claims 1 to 4 wherein the two points are situated on separate edges of the circuit board.

9. Ultrasound flow meter according to any of the preceding claims, comprising fixing means arranged to fix the first ultrasound transducer to the circuit board, such as a clip, such as solder, such as a bracing, such as the fixing means additionally serving to electrically connect the first transducer to the electronic circuit on the circuit board.

10. Ultrasound flow meter according to any of the preceding claims, wherein the first ultrasound transducer is arranged to emit ultrasonic signals in a direction substantially perpendicular to a direction of fluid in the measurement tube of the ultrasound flow meter.

11. Ultrasound flow meter according to any of the preceding claims, wherein the ultrasound flow meter further comprises a second ultrasound transducer, wherein the circuit board (102, 202) is arranged for operating the second ultrasound transducer (106, 206), and wherein a second set of at least two points on an edge of the circuit board serve to limit relative movement between the second ultrasound transducer and the circuit board in a direction along a line spanned by the second set of at least two points.

12. Ultrasound flow meter according to claim 11, wherein the circuit board (202) serves to determine a distance (222) between the first and second ultrasound transducers (206) when placed adjacent to the respective first and second sets of at least two points, and wherein said distance matches a distance (224) between corresponding first and second transducer receiving positions of the housing (220).

13. Ultrasound flow meter according to any of the previous claims, wherein the first ultrasound transducer is provided with a sheet steel membrane pre-glued onto a surface of the transducer for contact with the fluid flow.

14. Consumption meter comprising a flowmeter according to any of the preceding claims, wherein the circuit board has two levels, an upper level and a lower level, wherein the upper level of the circuit board is shaped such that two points on an edge of the upper level serve to limit relative movement between the first ultrasound transducer and the circuit board in a direction along a line spanned by the two points.

15. Consumption meter comprising a flow meter according to any of claims 1-14, wherein the consumption meter is one of: a heating meter, a cooling meter, a water meter, or a gas meter.

16. A method of manufacturing an ultrasound flow meter, the method comprising
- providing a circuit board with an electronic circuit arranged for operating a first ultrasound transducer, **characterized in that** the method further comprises
- shaping an edge of the circuit board so as to provide at least two points serving to limit relative movement between the first transducer and circuit board in a direction along a line spanned by the two points,
- placing the first transducer with its boundary adjacent to the two points, and
- mounting the circuit board and the first ultrasound transducer in relation to a housing with a measuring tube arranged inside.

## Patentansprüche

1. Ultraschallströmungsmesser, angeordnet zum Messen einer Strömungsgeschwindigkeit eines durch ein Messrohr strömenden Fluids, wobei der Strömungsmesser umfasst
- ein Gehäuse (220) mit einem im Inneren angeordneten Messrohr (214) und
- einen ersten Ultraschallwandler (106, 206) und
- eine Leiterplatte (102, 202) mit einem elektronischen Schaltkreis (104, 204), der zum Betrieb des ersten Ultraschallwandlers (106, 206) angeordnet ist, **dadurch gekennzeichnet, dass** die Leiterplatte derart ausgebildet ist, dass mindestens zwei Punkte an einem Rand der Leiterplatte zur Begrenzung relativer Bewegung zwischen dem ersten Ultraschallwandler und der Leiterplatte in einer Richtung entlang einer von den zwei Punkten definierten Linie dienen.

2. Ultraschallströmungsmesser nach Anspruch 1, wobei der Rand Teil einer Umfangsbegrenzung der Leiterplatte bildet.

3. Ultraschallströmungsmesser nach Anspruch 1 oder 2, wobei ein Abschnitt des Rands derart ausgebildet ist, dass er zu einem Abschnitt einer Kontur des ersten Ultraschallwandlers passt.

4. Ultraschallströmungsmesser nach einem der vorhergehenden Ansprüche, wobei eine durch eine Fläche der Leiterplatte definierte Ebene den ersten Ultraschallwandler schneidet.

5. Ultraschallströmungsmesser nach einem der vorhergehenden Ansprüche, wobei sich die zwei Punkte auf einem einzigen eine Begrenzung eines Lochs in der Leiterplatte bildenden Rand, wie dem eine Begrenzung einer Aussparung in der Leiterplatte bildenden Rand, befinden.

6. Ultraschallströmungsmesser nach Anspruch 5, wobei das Loch ein Durchgangsloch in der Leiterplatte ist, wie ein Durchgangsloch mit einer Form, die um den ersten Wandler passt, wie ein Durchgangsloch mit einer von dem ersten Wandler abweichenden Form, wie ein Durchgangsloch mit einer zur Form des ersten Wandlers passenden Form.

7. Ultraschallströmungsmesser nach Anspruch 5 oder 6, wobei der erste Ultraschallwandler eine kreisförmige Form aufweist und wobei das Loch eine der folgenden Formen aufweist: kreisförmig, dreieckig und rechteckig.

8. Ultraschallströmungsmesser nach einem der Ansprüche 1 bis 4, wobei sich die zwei Punkte auf unterschiedlichen Rändern der Leiterplatte befinden.

9. Ultraschallströmungsmesser nach einem der vorhergehenden Ansprüche, umfassend Befestigungsmittel, die zum Befestigen des ersten Ultraschallwandlers an der Leiterplatte angeordnet sind, wie eine Schelle, wie Lot, wie eine Verspannung, wie Befestigungsmittel, die zusätzlich als elektrische Verbindung zwischen dem ersten Wandler und dem elektronischen Schaltkreis auf der Leiterplatte dienen.

10. Ultraschallströmungsmesser nach einem der vorhergehenden Ansprüche, wobei der erste Ultraschallwandler zum Aussenden von Ultraschallsignalen in eine Richtung angeordnet ist, die im Wesentlichen senkrecht zu einer Richtung des Fluids in dem Messrohr des Ultraschallströmungsmessers ist.

11. Ultraschallströmungsmesser nach einem der vorhergehenden Ansprüche, wobei der Ultraschallströmungsmesser weiterhin einen zweiten Ultraschallwandler umfasst, wobei die Leiterplatte (102, 202) zum Betrieb des zweiten Ultraschallwandlers (106, 206) angeordnet ist und wobei ein zweiter Satz mindestens zweier Punkte an einem Rand der Leiterplatte zur Begrenzung relativer Bewegung zwischen dem zweiten Ultraschallwandler und der Leiterplatte in einer Richtung entlang einer von dem zweiten Satz mindestens zweier Punkte definierten Linie dient.

12. Ultraschallströmungsmesser nach Anspruch 11, wobei die Leiterplatte (202) zur Bestimmung eines Abstands (222) zwischen dem ersten und dem zweiten Ultraschallwandler (206) dient, wenn sie neben dem ersten und dem zweiten Satz mindestens zweier Punkte angebracht wird, und wobei der Abstand einem Abstand (224) zwischen einer ersten und einer zweiten den Wandler aufnehmenden Position des Gehäuses (220) entspricht.

13. Ultraschallströmungsmesser nach einem der vorhergehenden Ansprüche, wobei der erste Ultraschallwandler mit einer vorher auf die Oberfläche des Wandlers geklebten Stahlblechmembran für den Kontakt mit dem Strömungsfluss versehen ist.

14. Verbrauchsmesser, umfassend einen Strömungsmesser nach einem der vorhergehenden Ansprüche, wobei die Leiterplatte zwei Ebenen aufweist, eine obere Ebene und eine untere Ebene, wobei die obere Ebene der Leiterplatte derart ausgebildet ist, dass zwei Punkte an einem Rand der oberen Ebene zur Begrenzung relativer Bewegung zwischen dem ersten Ultraschallwandler und der Leiterplatte in einer Richtung entlang einer von den zwei Punkten definierten Linie dienen.

15. Verbrauchsmesser, umfassend einen Strömungsmesser nach einem der Ansprüche 1-14, wobei der Verbrauchsmesser entweder ein Wärmemesser, ein Kältemesser, ein Wassermesser oder ein Gasmesser ist.

16. Verfahren zur Herstellung eines Ultraschallströmungsmessers, wobei das Verfahren umfasst
- Bereitstellen einer Leiterplatte mit einem elektronischen Schaltkreis, der zum Betrieb eines ersten Ultraschallwandlers angeordnet ist, **dadurch gekennzeichnet, dass** das Verfahren weiterhin umfasst
- das Formen eines Rands der Leiterplatte zur Bereitstellung von mindestens zwei Punkten, die zur Begrenzung relativer Bewegung zwischen dem ersten Wandler und der Leiterplatte in einer Richtung entlang einer von den zwei Punkten definierten Linie dienen,
- Anbringen des ersten Wandlers mit seiner Begrenzung neben den zwei Punkten und
- Montieren der Leiterplatte und des ersten Ultraschallwandlers in Bezug zu einem Gehäuse mit einem im Inneren angeordneten Messrohr.

## Revendications

1. Débitmètre à ultrasons disposé pour mesurer une vitesse d'écoulement d'un fluide s'écoulant au travers d'un tube de mesure, le débitmètre comprenant
- un boîtier (220) dans lequel est disposé le tube de mesure (214), et
- un premier transducteur à ultrasons (106, 206), et
- une carte de circuit imprimé (102, 202) dotée d'un circuit électronique (104, 204) disposé pour commander le premier transducteur à ultrasons (106, 206), **caractérisé en ce que** la carte de circuit imprimé est conformée de manière à ce qu'au moins deux points sur un bord de la carte de circuit imprimé servent à limiter le mouvement relatif entre le premier transducteur à ultrasons et la carte de circuit imprimé dans une direction le long d'une ligne passant par les deux points.

2. Débitmètre à ultrasons selon la revendication 1, dans lequel le bord fait partie d'une limite circonférentielle de la carte de circuit imprimé.

3. Débitmètre à ultrasons selon la revendication 1 ou 2, dans lequel une partie du bord est conformée pour s'adapter à une partie d'un contour du premier transducteur à ultrasons.

4. Débitmètre à ultrasons selon l'une quelconque des revendications précédentes, dans lequel un plan défini par une surface de la carte de circuit imprimé traverse le premier transducteur à ultrasons.

5. Débitmètre à ultrasons selon l'une quelconque des revendications précédentes, dans lequel les deux points sont situés sur un même bord qui forme une limite d'un trou dans la carte de circuit imprimé, tel que le bord formant une limite d'un évidement dans la carte de circuit imprimé.

6. Débitmètre à ultrasons selon la revendication 5, dans lequel le trou est un trou traversant la carte de circuit imprimé, tel qu'un trou traversant conformé pour s'adapter autour du premier transducteur, tel qu'un trou traversant possédant une forme différente de celle du premier transducteur, tel qu'un trou traversant possédant une forme correspondant à une forme du premier transducteur.

7. Débitmètre à ultrasons selon la revendication 5 ou 6, dans lequel le premier transducteur à ultrasons possède une forme circulaire, et dans lequel le trou possède l'une des formes suivantes : circulaire, triangulaire et rectangulaire.

8. Débitmètre à ultrasons selon l'une quelconque des revendications 1 à 4, dans lequel les deux points sont situés sur des bords distincts de la carte de circuit imprimé.

9. Débitmètre à ultrasons selon l'une quelconque des revendications précédentes, comprenant un moyen de fixation disposé pour fixer le premier transducteur à ultrasons sur la carte de circuit imprimé, tel qu'une patte, tel qu'une soudure, tel qu'une attache, tel que le moyen de fixation sert également à raccorder électriquement le premier transducteur au circuit électronique de la carte de circuit imprimé.

10. Débitmètre à ultrasons selon l'une quelconque des revendications précédentes, dans lequel le premier transducteur à ultrasons est disposé pour émettre des signaux ultrasonores dans une direction essentiellement perpendiculaire à une direction du fluide dans le tube de mesure du débitmètre à ultrasons.

11. Débitmètre à ultrasons selon l'une quelconque des revendications précédentes, dans lequel le débitmètre à ultrasons comprend également un deuxième transducteur à ultrasons, dans lequel la carte de circuit imprimé (102, 202) est disposée pour commander le deuxième transducteur à ultrasons (106, 206), et dans lequel un deuxième ensemble d'au moins deux points sur un bord de la carte de circuit imprimé sert à limiter le mouvement relatif entre le deuxième transducteur à ultrasons et la carte de circuit imprimé dans une direction le long d'une ligne passant par le deuxième ensemble d'au moins deux points.

12. Débitmètre à ultrasons selon la revendication 11, dans lequel la carte de circuit imprimé (202) sert à déterminer une distance (222) entre le premier et le deuxième transducteur à ultrasons (206) lorsqu'ils sont adjacents au premier et au deuxième ensemble respectifs d'au moins deux points, et dans lequel ladite distance correspond à une distance (224) entre les emplacements correspondants de réception du premier et du deuxième transducteur sur le boîtier (220).

13. Débitmètre à ultrasons selon l'une quelconque des revendications précédentes, dans lequel le premier transducteur à ultrasons est muni d'une membrane en tôle d'acier précollée sur une surface du transducteur pour le contact avec l'écoulement de fluide.

14. Compteur de consommation comprenant un débitmètre selon l'une quelconque des revendications précédentes, dans lequel la carte de circuit imprimé possède deux niveaux, un niveau supérieur et un niveau inférieur, dans lequel le niveau supérieur de la carte de circuit imprimé est conformé de manière à ce que deux points sur un bord du niveau supérieur servent à limiter le mouvement relatif entre le premier transducteur à ultrasons et la carte de circuit imprimé dans une direction le long d'une ligne passant par les deux points.

15. Compteur de consommation comprenant un débitmètre selon l'une quelconque des revendications 1 à 14, dans lequel le compteur de consommation est de l'un des types suivants : compteur de chauffage, compteur de refroidissement, compteur d'eau ou compteur de gaz.

16. Méthode de fabrication d'un débitmètre à ultrasons, la méthode comprenant
- apport d'une carte de circuit imprimé dotée d'un circuit électronique disposé pour commander un premier transducteur à ultrasons, **caractérisée en ce que** la méthode comprend également
- conformation d'un bord de la carte de circuit imprimé de manière à obtenir au moins deux points servant à limiter le mouvement relatif entre le premier transducteur et la carte de circuit imprimé dans une direction le long d'une ligne passant par les deux points,
- mise en place du premier transducteur de manière à ce que sa limite soit adjacente aux deux points, et
- montage de la carte de circuit imprimé et du premier transducteur à ultrasons en relation avec un boîtier dans lequel est disposé un tube de mesure.
